(19)

Europäisches Patentamt

European Patent Office

Office européen des brevets

(11) **EP 4 116 010 A1**

(12) **EUROPEAN PATENT APPLICATION**

published in accordance with Art. 153(4) EPC

(43) Date of publication:
**11.01.2023 Bulletin 2023/02**

(21) Application number: **21762324.8**

(22) Date of filing: **21.05.2021**

(51) International Patent Classification (IPC):
**B22F 1/05** (2022.01)　　　**B22F 1/054** (2022.01)
**C22C 9/04** (2006.01)　　　**A01N 59/20** (2006.01)
**A01N 59/26** (2006.01)

(52) Cooperative Patent Classification (CPC):
(C-Sets available)
**A01N 59/26; A01P 1/00; B22F 1/052; B22F 1/054;**
**C22C 1/0425; C22C 9/02;** B22F 1/10; B22F 9/082;
B22F 2999/00　　　　　　　　　　　　(Cont.)

(86) International application number:
**PCT/JP2021/019394**

(87) International publication number:
**WO 2022/244248 (24.11.2022 Gazette 2022/47)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Harada Metal Industry Co., Ltd.**
**Toda-shi, Saitama 3350023 (JP)**

(72) Inventors:
• **HARADA, Mario**
 **Toda-shi, Saitama 3350023 (JP)**
• **TANIGUCHI, Moriya**
 **Toda-shi, Saitama 3350023 (JP)**

(74) Representative: **LKGLOBAL**
**Lorenz & Kopf PartG mbB Patentanwälte**
**Brienner Straße 11**
**80333 München (DE)**

(54) **PHOSPHOR BRONZE ALLOY POWDER**

(57)　A phosphor bronze alloy powder having antibacterial properties, deodorizing properties, and freshness keeping properties, comprising 1.05% by weight of tin and 0.09% by weight of phosphorus, wherein the remainder is composed of copper and unavoidable impurities.

[FIG. 5]

**(Cont. next page)**

EP 4 116 010 A1

(52) Cooperative Patent Classification (CPC): (Cont.)

C-Sets
**A01N 59/26, A01N 59/20;**
B22F 2999/00, C22C 1/0425, B22F 1/052,
B22F 2207/13

**Description**

[Field of Invention]

The present invention relates to a phosphor bronze alloy powder having highly antibacterial properties, deodorizing properties, and freshness keeping properties.

[Background Art]

It is conventionally known that copper, silver, tin, and the like have antibacterial properties, and they are used in various fields. It is said that the reason why these metals exhibit antibacterial properties is that ions generated by dissolving in water destroy the cell walls and cell membranes of microorganisms and bind to enzymes and proteins to reduce their activity and metabolic function. In addition, it is also said that the electrons emitted at the time of ionization cause production of active oxygen from oxygen dissolved in the air or water and chemically attack the organic matter in the microorganisms, which is also a factor in bactericidal and antibacterial properties.

On the other hand, since the phosphor bronze alloy powder product is a powder alloy containing tin and has excellent workability in that plate-like bulk products may be easily pulverized into powder using various atomizing methods and the like, it is also easy and possible to obtain a powder particle size suitable for application by using a classifier. By utilizing four characteristics in total, the characteristic of favorable workability and the three characteristics of highly antibacterial property, deodorizing property, and freshness keeping property, application developments different from conventional applications may be expected.

In light of such a point of view, to outline an example of the use of copper alloys in fields that require highly antibacterial properties, deodorizing properties, and freshness keeping properties, socks to which are imparted an effect of preventing athlete ' s foot by interweaving copper wire therein can be given as an example having a number of antibacterial and deodorizing effects. Further, patent literature 1 discloses a filtration apparatus for filtering an aqueous washing liquid using a wire mesh consisting of a metal such as copper or silver.

In addition, patent literature 3 discloses an antibacterial deodorant composed of titanium oxide particles carrying a deodorizing antibacterial component selected from silver, copper, zinc, tin, and the like, and an amine compound. However, none of these are directly touched by human hands or the like, and in fact none can be found that are intended to be touched directly by the hand such as handrails attached to the passages of medical institutions that require a high degree of bactericidal properties or antibacterial properties. In addition, it can be said that none of these have freshness keeping properties.

[Prior Art Literature]

[Patent Literature]

[Patent Literature 1] JP 2015-214528 A
[Patent Literature 2] JP 2010-137353 A
[Patent Literature 3] JP 2009-268510 A
[Patent Literature 4] JP H5-125591 A

[Summary of Invention]

[Problem to be Solved by Invention]

The reasons for this include that phosphor bronze alloys have not been clearly shown to exhibit higher antibacterial properties than pure copper, and that copper and copper alloys are prone to discoloration due to contacting the human body.

Therefore, the problem to be solved by the present invention is to propose new applications of the phosphor bronze alloy that have not existed previously based on amplified antibacterial properties in addition to newly exhibited characteristics, such as deodorizing properties and freshness keeping properties, through powdering, in the process of verifying the highly antibacterial properties thereof.

[Means for Solving Problem]

That is, the present invention relates to a phosphor bronze alloy powder having highly antibacterial properties, deodorizing properties, and freshness keeping properties, containing 1.05% by weight of tin and 0.09% by weight of phosphorus, wherein the remainder thereof is composed of copper and unavoidable impurities.

[Effect of Invention]

According to the present invention, it is possible to provide a phosphor bronze alloy powder having highly antibacterial properties, deodorizing properties, and freshness keeping properties.

[Brief Description of Drawings]

FIG. 1 is a photo showing an example of a halo test
FIG. 2 is a photo showing an example of a film adhesion test
FIG. 3A is a photo of the halo width in the halo test when the surface of the phosphor bronze alloy is rolled and then nothing is done thereon
FIG. 3B is a photo of the halo width in the halo test when the surface of the phosphor bronze alloy is roughened to increase the specific surface area
FIG. 3C is a photo of the halo width in the halo test of a phosphor bronze alloy ultrafine powder of sizes ranging from 1 to 500 nanometers
FIG. 3D is a photo of the halo width in the halo test of a phosphor bronze alloy powder of sizes ranging from 10 to 20 micrometers
FIG. 3E is a photo of the halo width in the halo test of a phosphor bronze alloy ultrafine powder of sizes ranging from 1 to 500 nanometers
FIG. 3F is a photo of the halo width in the halo test of a phosphor bronze alloy powder of sizes ranging from 10 to 20 micrometers
FIG. 4A is a photo of the phosphor bronze alloy ultrafine powder of sizes ranging from 1 to 500 nanometers (1)
FIG. 4B is a photo of the phosphor bronze alloy ultrafine powder of sizes ranging from 1 to 500 nanometers (2)
FIG. 4C is a photo of the phosphor bronze alloy ultrafine powder of sizes ranging from 1 to 500 nanometers (3)
FIG. 4D is a photo of the phosphor bronze alloy ultrafine powder of sizes ranging from 1 to 500 nanometers (4)
FIG. 5 shows results of the halo width measurements for the powder and the ultrafine powder of the phosphor bronze alloy
FIG. 6A is a photo of the halo width in the halo test of the phosphor bronze alloy ultrafine powder (1)
FIG. 6B is a photo of the halo width in the halo test of the phosphor bronze alloy ultrafine powder (2)
FIG. 6C is a photo of the halo width in the halo test of the phosphor bronze alloy ultrafine powder (3)
FIG. 7 is a photo of the phosphor bronze alloy powder added to a mixed solution of an aqueous solution and a binder and applied to the surface of a wooden cylindrical product (length 1,000 mm) using a spray gun or the like

[Embodiments of Invention]

The phosphor bronze alloy powder of the present invention contains 1.05% by weight of tin and 0.09% by weight of phosphorus, and the remainder is composed of copper and unavoidable impurities.
The phosphor bronze alloy powder has highly antibacterial properties, deodorizing properties, and freshness keeping properties.
Here, tin, phosphorus, copper, and unavoidable impurity content in the phosphor bronze alloy powder can be measured by fluorescent X-ray analysis. Examples of a measuring device include an energy dispersion type fluorescent X-ray analyzer manufactured by Shimadzu Corporation.
Examples of unavoidable impurities include Pb, Be, Co, Si, Ni, S, Zn, Fe, and Al.
Fluorescent X-ray analysis is suitable for analysis of components such as powder products and fluid products.
Additionally, scattering of analytical results due to the analytical device and analysis conditions is extremely small in the fluorescent X-ray analysis of the phosphor bronze alloy. The present inventors have validated that identical results regarding the composition ratios described in the present specification ca be obtained when fluorescent X-ray analysis of two identical test specimens of the phosphor bronze alloy having differing analysis conditions is performed.
The phosphor bronze alloy powder is preferably composed of fine particles having a particle diameter of 1 nanometer to 140 micrometers.

The phosphor bronze alloy powder is preferably prepared by pulverizing phosphor bronze alloy bulk material and classifying such that the particle diameters fall within the range of 1 nanometer to 140 micrometers.

The classification is preferably carried out by dividing the phosphor bronze alloy powder into a powder falling within two particle diameter ranges and a powder not falling within these ranges, and is preferably carried out using the powder falling within the two particle diameter ranges.

The two particle diameter ranges are preferably composed of two types: (1) 1 to 500 nanometers and (2) 10 to 20 micrometers.

The two particle diameter ranges are preferably based on a specified limitation range of an article using the phosphor bronze alloy powder.

(1) The 1 to 500 nanometer product preferably contributes to exhibiting highly antibacterial properties by adding the phosphor bronze alloy powder to a mixed solution of a liquid product and a binder, and using such mainly as a coating material for solid articles.

(2) In addition to a method of use similar to that described in (1), the 10 to 20 micrometer product preferably contributes to leveraging the natural properties of the phosphor bronze alloy powder, being the antibacterial properties, deodorizing properties, and freshness keeping properties.

Here, the classification in the present invention is performed based on JIS Z 2510. Specifically, the lower limit value is set to 10 micrometers and the upper limit value is set to 20 micrometers, and the product is subjected to an air classifier twice to manufacture products of 10 to 20 micrometers.

An article of the present invention uses the phosphor bronze alloy powder of the present invention to utilize the antibacterial properties, deodorizing properties, and freshness keeping properties of the phosphor bronze alloy powder.

In one embodiment of the present invention, a phosphor bronze alloy powder having highly antibacterial properties is added to a mixed solution of a liquid product such as an aqueous solution and a binder, then the obtained liquid is uniformly supported onto an upper part of a wooden piece and a metal piece using a spray gun or the like, and the antibacterial substance is made into a powder, thereby increasing the specific surface area, in light of which antibacterial properties may be amplified.

In one embodiment of the present invention, the phosphor bronze alloy powder may be wrapped as-is in a bag such as a sheet dryer bag, a sweets bag, or a burger bag to obtain an article to which deodorizing properties and freshness keeping properties are imparted in addition to the amplified antibacterial properties. The bag is made of, for example, paper or cloth.

Based on this, in light of the deodorant properties thereof, the bag may be used in shoe boxes and vegetable storage boxes at home, supermarket vegetable carry boxes and vegetable storage rooms outside of household use, and the like, and may be used in shoe boxes at medical institutions and the like, vegetable storage rooms in a kitchen, and the like. Compared to plate-like products, many possibilities of use are expanded by the exhibition of deodorizing properties and freshness keeping properties in addition to the amplified antibacterial properties, and in places and the like where many unspecified people gather and disperse, which is always a problem for countermeasures against infectious diseases, the parts that everyone touches directly are covered, thereby enabling prevention of the spread of infectious diseases.

Currently, construction companies, kitchens, baths, toilets, and the like are calling for barrier-free application, and by successfully using the phosphor bronze alloy powder, it is possible to deal with the barrier-free application of handrails, external shoe boxes, restaurant trays, tongs, and business hotels that so many people touch on a daily basis. It may also be used to prevent infection caused by bacteria and viruses that inevitably occur in the case of infectious disease problems.

In addition, the present invention has been made as a result of clarifying the relationship between the antibacterial properties of a material before and after application to a wooden piece or a metal piece, and studying the relationship between surface properties and the manifestation of discoloration.

That is, one embodiment of the present invention relates to an article wherein phosphor bronze alloy powder having highly antibacterial properties, deodorizing properties, and freshness keeping properties containing 1.05% by weight of tin and 0.09% by weight of phosphorus and the remainder being composed of copper and unavoidable impurities, is liquefied and applied to the upper part of a wooden piece or a metal piece, or wherein the product is used as-is without being liquefied, to impart highly antibacterial properties, deodorizing properties, and freshness keeping properties.

Further, one embodiment of the present invention is formed by melting a rolled bulk plate-like product and producing a powder by any of three types of atomizing methods. The three types of atomization methods are water atomization, machine atomization, and gas atomization.

The phosphor bronze alloy powder having highly antibacterial properties, deodorizing properties, and freshness keeping properties is used in two forms, one wherein it is added to a mixed solution of an aqueous solution and a binder and applied using a spray gun, another wherein it is wrapped in

paper, cloth, or the like as-is to utilize a shape having a large specific surface area.

The present inventors studied the relationship of the antibacterial properties, deodorizing properties, and freshness keeping properties of the phosphor bronze alloy powder when applied in liquid form and when wrapped in paper, cloth, and the like in phosphor bronze alloy powder form as-is by an antibacterial test studied using a microorganism culture test, a deodorant test to study deodorizing properties, and a freshness keeping test to study freshness keeping properties, and as a result, found that the phosphor bronze alloy powder having a tin content of 1.05% by weight and a phosphorus content of 0.09% by weight exhibits remarkable antibacterial properties, deodorizing properties, and freshness keeping properties, accomplishing the present invention.

In the process of studying a processing method that prevents color tone changes due to contacting the human body, makes it difficult to see fingerprints or the like by roughening the surface, or reduces darkening due to human sebum or the like, not only was it found that the phosphor bronze alloy powder had an amplification of antibacterial properties, but also that strong deodorizing properties and freshness keeping properties were discovered in addition to antibacterial properties, thereby making it possible to contemplate and propose a variety of uses having further functionality.

For example, the phosphor bronze alloy powder is obtained by melting a phosphor bronze alloy bulk material containing 1.05% by weight of tin and 0.09% by weight of phosphorus and the remainder composed of copper and unavoidable impurities, and rapidly cooling using high speed cooling water. In light of the fact that the phosphor bronze alloy powder exhibits an amplification effect of antibacterial properties, as a result of further study of its characteristics, it not only helps prevent discoloration of the final product, which was the original purpose, but also exhibits the two functions of deodorizing properties and freshness keeping properties.

Generally, as one of the antibacterial factors of copper, copper alloys, and the like, it is considered that the electrons emitted when a metal is ionized activate a part of oxygen dissolved in air or water as described above. Electron transfer occurs between each component constituting the phosphor bronze alloy powder due to differences in the ionization potentials and associated ionization tendencies of each component, and it is understood that this electron transfer in a defined composition is tied to the result of adding the phosphor bronze alloy powder to a mixed solution of an aqueous solution and a binder and applying such to the upper part of a wooden piece or metal piece using a spray gun or the like, or by wrapping the phosphor bronze alloy powder as-is in paper, cloth, or the like, whereby the phosphor bronze alloy powdered product exhibits antibacterial properties, deodorizing properties, and freshness keeping properties.

In general, the smaller the particle diameter of the metal powder, the larger the specific surface area, and the characteristics are also significantly different from those in a lump and plate form; in particular, by making the particle diameters uniform in two suitable ranges of 1 to 500 nanometers and 10 to 20 micrometers, highly antibacterial properties, deodorizing properties, and freshness keeping properties are amplified, and the range of possibilities for using the present product is expanded and becomes clear.

Next, an embodiment of the present invention is described in which the phosphor bronze alloy powder was wrapped in paper, cloth, or the like as-is, and the antibacterial properties, deodorizing properties, and freshness keeping properties were studied.

First, a rolled phosphor bronze alloy thin film plate was melted and rapidly cooled by a water atomizing method, whereby the metal was instantaneously powdered.

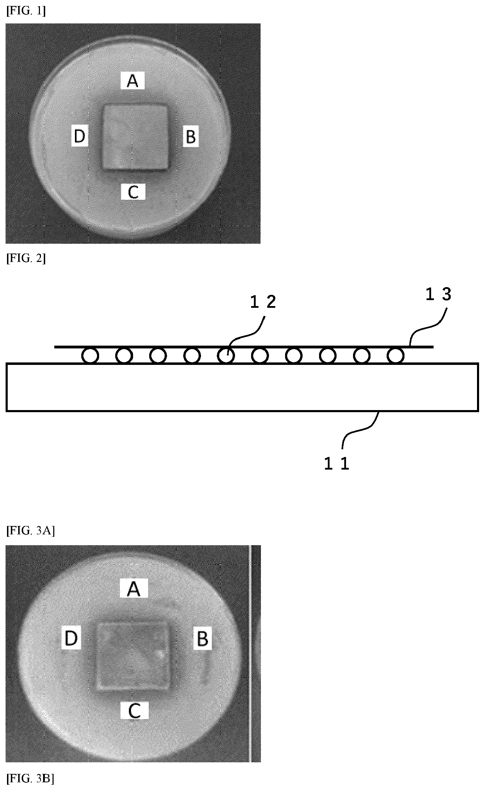

From this powdered product, powder of two types of ranges of particle diameter of 1 to 500 nanometers and 10 to 20 micrometers were classified and taken, and the powder having a size of 10 to 20 micrometers was used in a form as-is, so several grams were taken as a sample for the antibacterial test, and the halo test was performed according to JIS L 1902. The bacteria used in the test were one type of Staphylococcus aureus. FIG. 1 is a photo showing an example of the halo test, and an example of *Staphylococcus aureus* is shown here. The size of the specimen was 28 mm × 28 mm

In the halo test, the bacteria were cultured in a petri dish, and the specimen was placed in the center to incubate for a certain period of time. Then, the width of the area called the halo where the bacteria around the test piece have disappeared was measured. In the test, three different specimens were used for three different bacterial species. As shown by A, B, C, and D in FIG. 1, the halo width was measured on 4 sides of the test piece, so the measurement was performed 12 times under 1 condition.

In FIG. 1, the maximum halo widths and averages of the four sides (A, B, C and D) were as follows.

A: 1mm
B: 1mm
C: 2 mm
D: 1mm
Average: 1.25 mm

Table 1 is a table summarizing the average value of the measured value obtained from an experiment in which the phosphor bronze alloy powder used in the test was added to a mixed solution of an aqueous solution and a binder and applied to the upper part of a wooden piece using a spray gun, and then the halo method and the film adhesion method test were performed.

The film adhesion test was conducted as follows. It should be noted that FIG. 2 is used for the description.

A bacterial solution 12 (0.4 mL) was added dropwise to the surface of a sample 11 (50 $\times$ 50 mm). The test bacterium was *Escherichia coli* or *Staphylococcus aureus.*

Next, the viable cell count of the control sample was measured immediately after the bacterial solution 12 was added dropwise.

Next, a polyethylene film 13 (40 $\times$ 40 mm) was placed on the bacterial solution 12.

Then, it was stored at 35 $\pm$ 1°C, RH 90% or more for 24 hours.

After storage, the viable cell count of the sample 11 was measured.

An increase/decrease value difference was obtained by the following formula.

$$\text{Increase/decrease value difference} = \text{Log}B - \text{Log}C$$

Viable cell count B (antibacterial unprocessed sample)
Viable cell count C (antibacterial processed sample)

In general, the standard length of handrails in the home and in various places is 35 cm. It is long enough to hang a towel or be touched by young children, the elderly, and people having disabilities to gain driving force. Table 1 shows the antibacterial properties examined for this length. It should be noted that the viable cell count was examined by the film method. The test bacterium was *Staphylococcus aureus.*

Sample No. 1-1 and No. 1-2 are the results when the bacteria were implanted on a non-antibacterial film.

The cell counts in Sample No. 1-1 immediately after inoculation are the cell counts that first existed at the time of implantation of bacteria onto the film, but there were slight differences, such as $1.9 \times 10^4$, $2.0 \times 10^4$, and $2.1 \times 10^4$.

Sample No. 1-2 shows that the viable cell count decreased slightly after 24 hours without contacting the antibacterial substance.

However, in the case of no contact with the antibacterial substance, the viable cell count would surely become 0 after 24 hours (Sample No. 1-3 to No. 1-5).

[Table 1]

| Sample | | Viable Cell Count (per cm$^2$) | | | |
|---|---|---|---|---|---|
| | | Viable Cell Count -1 | Viable Cell Count - 2 | Viable Cell Count - 3 | Average |
| No. 1-1 | Immediately after inoculation (film) | $1.9 \times 10^4$ | $2.0 \times 10^4$ | $2.1 \times 10^4$ | $2.0 \times 10^4$ |
| No. 1-2 | 24 hours after (film) | $7.3 \times 10^3$ | $9.6 \times 10^3$ | $8.6 \times 10^3$ | $8.5 \times 10^3$ |
| No. 1-3 | 24 hours after (2) | <0.63 | <0.63 | <0.63 | <0.63 |
| No. 1-4 | 24 hours after (3) | <0.63 | <0.63 | <0.63 | <0.63 |

(continued)

| Sample | | Viable Cell Count (per cm$^2$) | | | |
|---|---|---|---|---|---|
| | | Viable Cell Count -1 | Viable Cell Count - 2 | Viable Cell Count - 3 | Average |
| No. 1-5 | 24 hours after (4) | <0. 63 | <0. 63 | - | <0. 63 |
| Sample No. 1-3: Viable cell count examination 24 hours after applying the phosphor bronze alloy powder on the surface of a φ65 mm-diameter wooden cylindrical rod (length 35 cm)<br>Sample No. 1-4: Viable cell count examination 24 hours after applying the phosphor bronze alloy powder on the surface of a φ32 mm-diameter wooden cylindrical rod (length 35 cm)<br>Sample No. 1-5: Viable cell count examination 24 hours after applying the phosphor bronze alloy powder on the surface of a φ32 mm-diameter wooden cylindrical rod having dimples (length 35 cm) (dimples are made on the rod in (3) to make it easier to hold) | | | | | |

The second most common handrail on the market after 35 cm is 100 cm, which is called a long handrail.

Therefore, the antibacterial property of a wooden cylindrical rod (long handrail) having a length of 1000 mm and a diameter of 32 mm was also examined by the film method. The results are shown in Table 2.

Sample No. 2-1 and No. 2-2 are the results from when the bacteria were implanted on a non-antibacterial film.

Sample No. 2-2 shows that the viable cell count decreased slightly after 24 hours without contacting the antibacterial substance.

However, in the case of no contact with the antibacterial substance, the viable cell count would surely become 0 after 24 hours (Sample No. 2-3).

That is, the handrail wherein the phosphor bronze powder was applied showed similar antibacterial properties whether the handrail had a length of 35 cm or was a long handrail.

[Table 2]

| Sample | | Viable Cell Count (per cm$^2$) | | | |
|---|---|---|---|---|---|
| | | Viable Cell Count -1 | Viable Cell Count - 2 | Viable Cell Count - 3 | Average |
| No. 2-1 | Immediately after inoculation (film) | $1.9 \times 10^4$ | $2.0 \times 10^4$ | $2.1 \times 10^4$ | $2.0 \times 10^4$ |
| No. 2-2 | 24 hours after (film) | $7.3 \times 10^3$ | $9.6 \times 10^3$ | $8.6 \times 10^3$ | $8.5 \times 10^3$ |
| No. 2-3 | 24 hours after (1) | <0. 63 | <0. 63 | <0. 63 | <0. 63 |
| Sample No. 2-3: Viable cell count examination 24 hours after applying the phosphor bronze alloy powder on the surface of a φ32 mm-diameter wooden cylindrical rod (length 100 cm) | | | | | |

Within the range of the present test condition, antibacterial properties, deodorizing properties, and freshness keeping properties above a certain level were observed.

FIG. 3A to FIG. 3F are photos of the results of measuring the halo widths of the phosphor bronze alloy plate, the phosphor bronze alloy powder, and the phosphor bronze alloy ultrafine powder.

FIG. 3A is a photo of the halo width in the halo test when the surface of the phosphor bronze alloy is rolled and then nothing is done thereon. The size of the specimen was 28 mm × 28 mm. The maximum halo widths of the four sides (A, B, C and D) in FIG. 3A were as follows.

- A: 2.8 mm

- B: 3.5 mm

- C: 3.5 mm

- D: 5.0 mm

FIG. 3B is a photo of the halo width in the halo test when the surface of the phosphor bronze alloy is roughened to increase the specific surface area. The size of the specimen was 28 mm × 28 mm. The maximum halo widths of the four sides (A, B, C and D) in FIG. 3B were as follows.

- A: 3.2 mm

- B: 3.4 mm

- C: 3.0 mm

- D: 3.4 mm

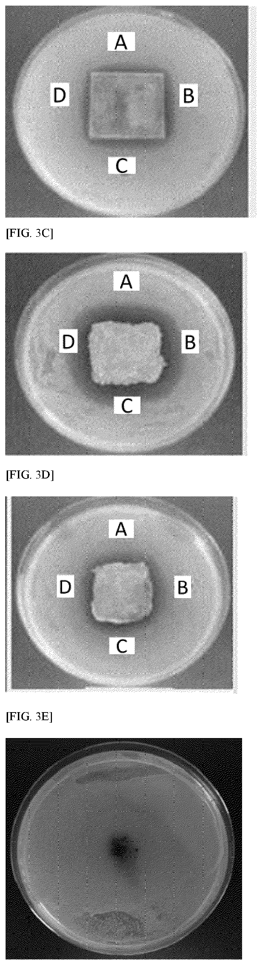

FIG. 3C is a photo of the halo width in the halo test of the phosphor bronze alloy ultrafine powder of sizes ranging from 1 to 500 nanometers. The size of the specimen is about 28 mm × about 28 mm. The maximum halo widths of the four sides (A, B, C and D) in FIG. 3C were as follows.

- A: 6.4 mm

- B: 6.5 mm

- C: 7.2 mm

- D: 6.9 mm

FIG. 3D is a photo of the halo width in the halo test of the phosphor bronze alloy powder of sizes ranging from 10 to 20 micrometers. The size of the specimen is about 28 mm × about 28 mm. The maximum halo widths of the four sides (A, B, C and D) in FIG. 3D were as follows.

- A: 4.2 mm

- B: 4.8 mm

- C: 4.2 mm

- D: 3.8 mm

FIG. 3E is a photo of the halo width in the halo test of the phosphor bronze alloy ultrafine powder of sizes ranging from 1 to 500 nanometers. The specimen is circular having a diameter of 3 mm. The diameter of the halo width is about 10.4 mm.

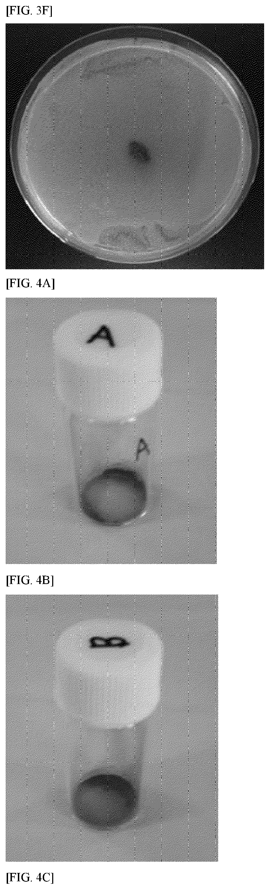

FIG. 3F is a photo of the halo width in the halo test of the phosphor bronze alloy powder having sizes ranging from 10 to 20 micrometers. The specimen is circular having a diameter of 3 mm. The diameter of the halo width is about 4.8 mm.
Through FIG. 3A to FIG. 3F, it may be understood that the powder product showed a halo width several times larger than that of the plate product and has higher antibacterial properties. For the powder product, it may also be seen that there is a clear difference in antibacterial properties between the powder product of 1 to 500 nanometers and the powder of 10 to 20 micrometers. That is, the phosphor bronze alloy ultrafine powder of sizes ranging from 1 to 500 nanometers is superior in antibacterial properties to the phosphor bronze alloy powder of sizes ranging from 10 to 20 micrometers.

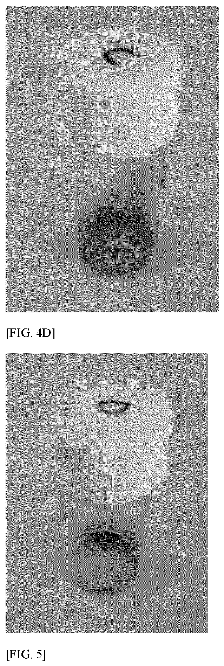

FIG. 4A to FIG. 4D are photos of the phosphor bronze alloy ultrafine powder of sizes ranging from 1 to 500 nanometers.
Classification is usually required to obtain phosphor bronze alloy ultrafine powders of sizes ranging from 1 to 500 nanometers. The yield of phosphor bronze alloy ultrafine powder after classification is extremely low. Therefore, classification was performed four times to obtain the phosphor bronze alloy ultrafine powder of sizes ranging from 1 to 500 nanometers. Then, the phosphor bronze alloy ultrafine powders obtained by the four classifications were combined and used in the halo test.
FIG. 5 is the results of the halo width measurement for the powder and the ultrafine powder of the phosphor bronze alloy.

In FIG. 5, the nanometer powdered product is a phosphor bronze alloy ultrafine powder of sizes ranging from 1 to 500 nanometers. The micrometer powdered product is a phosphor bronze alloy powder of sizes ranging from 10 to 20 micrometers.

The elapsed time is the time elapsed from the start of the experiment.

From the results of FIG. 5, it can be confirmed that the nanometer powdered product (ultrafine powdered product) has higher antibacterial properties than the micrometer powdered product.

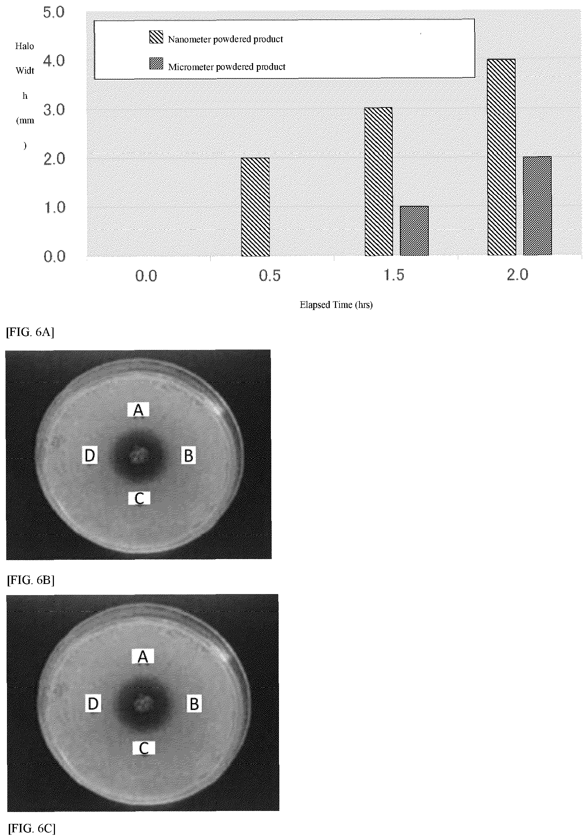

A halo test was conducted on a nanometer powdered product (ultrafine powder product) whose particle sizes were confirmed to be within the range of 1 to 500 nanometers. The test was conducted three times. FIG. 6A to FIG. 6C show the results. It should be noted that the size of the specimen is 5 mm in diameter.

FIG. 6A is a photo of the halo width in the halo test of the phosphor bronze alloy ultrafine powder. The average maximum halo width of the four sides (A, B, C and D) in FIG. 6A is 16.6 mm.

FIG. 6B is a photo of the halo width in the halo test of the phosphor bronze alloy ultrafine powder. The average maximum halo width of the four sides (A, B, C and D) in FIG. 6B is 17.2 mm.

FIG. 6C is a photo of the halo width in the halo test of the phosphor bronze alloy ultrafine powder. The average maximum halo width of the four sides (A, B, C and D) in FIG. 6C is 16.6 mm.

The results in FIG. 6A to FIG. 6C show that even a specimen having a diameter of only 5 mm can produce a large halo width in the case of the ultrafine powder.

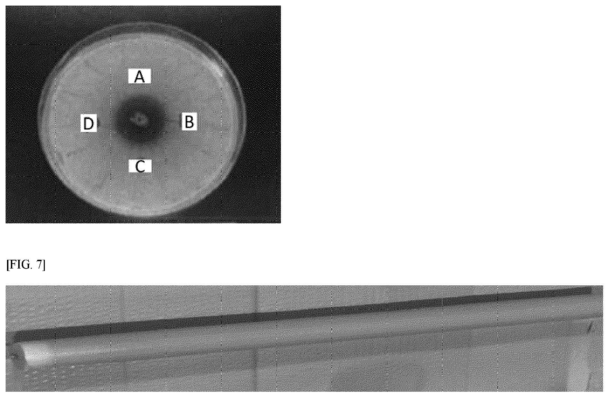

FIG. 7 is a perspective view illustrating an example in which the phosphor bronze alloy powder of the present invention classified into 1 to 140 nanometers is added to a mixed solution of an aqueous solution and a binder so that the phosphor bronze alloy accounts for 20% by weight, and the liquid is applied to a wooden cylindrical product (length 1000 mm) using a spray gun or the like.

As shown here, the phosphor bronze alloy powder of the present invention may be applied to the parts that are directly touched by hands, such as handrails and doorknobs, at the passages and entrances of medical institutions and nursing care facilities for the elderly, thereby enabling prevention of the spread of infectious diseases in advance.

As described above, according to the present invention, it is possible to provide a phosphor bronze alloy powder having excellent antibacterial properties and making fingerprints less apparent. It should be noted that the present invention is not limited to the above-described embodiments, and it goes without saying that the present invention includes various variations and modifications that can be conceived by a person having ordinary skill in the art of the present invention, even if there is a design change within a scope that does not deviate from the essential aim of the present invention.

**Claims**

1. A phosphor bronze alloy powder having highly antibacterial properties, deodorizing properties, and freshness keeping properties, comprising 1.05% by weight of tin and 0.09% by weight of phosphorus, wherein a remainder is composed of copper and unavoidable impurities.

2. The phosphor bronze alloy powder according to claim 1, comprising fine particles having a particle diameter of 1 nanometer to 140 micrometers.

3. The phosphor bronze alloy powder according to claim 2, wherein phosphor bronze alloy bulk material is pulverized and classified so that a particle diameter thereof falls within the range of 1 nanometer to 140 micrometers.

4. The phosphor bronze alloy powder according to claim 3, wherein classification is carried out by dividing the phosphor bronze alloy powder into a powder having two particle diameter ranges and a powder not falling within these ranges, preferably using the powder that falls within the two particle diameter ranges.

5. The phosphor bronze alloy powder according to claim 4, wherein the two particle diameter ranges comprise two types: (1) 1 to 500 nanometers and (2) 10 to 20 micrometers.

6. The phosphor bronze alloy powder according to claim 5, wherein the two particle diameter ranges are based on a specified limitation range of an article using the phosphor bronze alloy powder.

7. The phosphor bronze alloy powder according to claim 5 or 6 wherein (1) the 1 to 500 nanometers product contributes to exhibiting high antibacterial properties by putting the phosphor bronze alloy powder in a mixed solution of a liquid product and a binder, and using it mainly as a coating material for solid products, and

(2) the 10 to 20 micrometers product contributes to the utilization of antibacterial properties, deodorizing properties, and freshness keeping properties in the property of the phosphor bronze alloy powder as it is, in addition to the use method similar to the (1).

8. An article using the phosphor bronze alloy powder according to any one of claims 1 to 7, wherein highly antibacterial properties, deodorizing properties, and freshness keeping properties of the phosphor bronze alloy powder are utilized.

[FIG. 1]

[FIG. 2]

[FIG. 3A]

[FIG. 3B]

[FIG. 3C]

[FIG. 3D]

[FIG. 3E]

[FIG. 3F]

[FIG. 4A]

[FIG. 4B]

[FIG. 4C]

[FIG. 4D]

[FIG. 5]

[FIG. 6A]

[FIG. 6B]

[FIG. 6C]

[FIG. 7]

| | | |
|---|---|---|
| | **INTERNATIONAL SEARCH REPORT** | International application No. |
| | | PCT/JP2021/019394 |

**A. CLASSIFICATION OF SUBJECT MATTER**
B22F 1/00(2006.01)i
FI: B22F1/00 L

According to International Patent Classification (IPC) or to both national classification and IPC

**B. FIELDS SEARCHED**

Minimum documentation searched (classification system followed by classification symbols)
B22F1/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CiNii, Google Scholar

**C. DOCUMENTS CONSIDERED TO BE RELEVANT**

| Category* | Citation of document, with indication, where appropriate, of the relevant passages | Relevant to claim No. |
|---|---|---|
| Y | 平田 直哉 ほか，りん青銅鋳物の抗菌性，鋳造工学 全国講演大会 講演概要集，2014, p. 117, in particular, "2. Experimental procedure", "3. Experimental results and discussion", fig. 3, "2. Experimental procedure", "3. Experimental results and discussion", fig. 3, (HIRATA, Naoya et al. Journal of the Reports of the Japan Foundry Engineering Society Meeting.), non-official translation (Antimicrobial properties of phosphor bronze castings) | 1-8 |
| Y | JP 2011-063525 A (MIYAJI, Katsuteru) 31 March 2011 (2011-03-31) paragraphs [0003], [0017] | 1-8 |
| Y | JP 2011-088965 A (LONSEAL KOGYO KK) 06 May 2011 (2011-05-06) paragraph [0016] | 4-8 |

☐ Further documents are listed in the continuation of Box C.　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 June 2021 (09.06.2021) | 22 June 2021 (22.06.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT
Information on patent family members

International application No.

PCT/JP2021/019394

| Patent Documents referred in the Report | Publication Date | Patent Family | Publication Date |
|---|---|---|---|
| JP 2011-063525 A | 31 Mar. 2011 | (Family: none) | |
| JP 2011-088965 A | 06 May 2011 | (Family: none) | |

Form PCT/ISA/210 (patent family annex) (January 2015)

**EP 4 116 010 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015214528 A
- JP 2010137353 A
- JP 2009268510 A
- JP H5125591 A